# EUROPEAN PATENT APPLICATION

(11) **EP 4 474 880 A1**
(43) Date of publication of application: **11.12.2024**
(21) Application number: 23177625.3
(22) Date of filing: 06.06.2023
(51) Int. Cl.: G02B 7/00

(54) **ALIGNMENT DEVICE, SYSTEM, AND METHOD FOR ALIGNING A BEAM PROPAGATION DIRECTION**

(71) Applicant: Elionova AG, 1700 Fribourg (CH)
(72) Inventor: CASTELLA, Christophe, 3273 Kappelen (CH); LICHTENBERG, Georg, 50936 Köln (DE); OESCH, Bruno, 5233 Stilli (CH); SALATÉ, René Paul, 3074 Muri bei Bern (CH); SCHAWALLER, Manfred, 1700 Fribourg (CH)
(74) Representative: Müller-Boré & Partner Patentanwälte PartG mbB

(57) **Abstract**

An alignment device (10) for aligning a beam propagation direction (420) of a beam generating unit (400) to an aligning axis (12) of the alignment device (10), wherein the beam generating unit (400) is mountable to the alignment device (10), the alignment device (10) comprising a plurality of differently shaped cylindric housings (20_{1..n}) inserted into each other. Therein, each cylindric housing (20_{1..n}) comprises an outer surface (22_{1..n}) around its respective cylinder axis (21_{1..n}) and an inner cavity (23_{1..n}) around a respective cavity axis (24_{1..n}) extending through the respective cylindric housing (20_{1..n}); the inner cavity (23_{1..n}) of each except a smallest of the cylindric housings (20_{1..n}) is cylindric; the outer surface (22_{1..n}) of each except a largest of the cylindric housings (20_{1..n}) is cylindric and at least partially and rotatably arranged in the inner cavity (23_{1..n}) of an adjacent one of the cylindric housings (20_{1..n}); the inner cavity (23ₙ) of the smallest of the cylindric housings (20ₙ) is configured to at least partially receive the beam generating unit (400); the cavity axis (24_{1..n}) of each cylindric housing (20_{1..n}) is arranged at an alignment angle (25_{1..n}) >0° and/or eccentric to the cylinder axis (21_{1..n}) of the respective cylindric housing (20_{1..n}); and the aligning axis (12) of the alignment device (10) corresponds to the cylindric axis of the largest of the cylindric housings (20₁).

## Description

The invention relates to an alignment device for aligning a beam propagation direction of a beam generating unit to an aligning axis of the alignment device, a system for aiming a beam at a predetermined angle onto and/or at a predetermined point of a target object, and a method of aligning a beam propagation direction to an aligning axis of an alignment device.

In an evanescent field reader, directed laser beams are used for aiming the laser beam at a predetermined angle onto and at a predetermined target point of a target object. Therein, the propagation direction of the laser beam has to be exactly mounted and adjusted with respect to the position of the target object. Such an evanescent field reader, wherein a laser beam is used for irradiating a target point of a probe filled cuvette under the predetermined angle, is an example for a beam arrangement, which in the following description is also referred to as a beam system. Similar beam systems are for example based on a photon source, a neutron source, an ion source, or another electromagnetic source instead of using a laser.

In such a beam system, the beam source is often arranged in a standard beam housing of a beam generating unit, e.g., in a standard laser housing of a laser. The beam generating unit often is detachable from the beam system, e.g., to enable a replacement of the beam generating unit. The beam generating unit provides a beam emitting from the beam housing in a beam propagation direction. The beam propagation direction of a specific beam generating unit is, however, often slightly misaligned with respect to a center axis of the beam housing. Said misalignment may comprise an angular and/or translational misalignment.

Therefore, when assembling or replacing the beam generating unit of the beam system, the beam propagation direction of the beam generating unit usually has to be aligned by an adjustment unit of the beam system. Depending on the beam system, the adjustment unit may enable the adjustment of the beam propagation direction with respect to target point.

In common evanescent field readers, the adjustment unit enables adjusting the yaw, the pitch, the horizontal misalignment, and the vertical misalignment of the beam propagation direction. However, the known adjustment units are often bulky, cumbersome to operate and/or not accurate enough.

It is therefore an object of the present invention to improve aligning the beam propagation direction of a beam generating unit, in particular to simplify aligning and/or enable a cost-efficient alignment.

This problem is solved by the subjects of the independent claims, while preferred embodiments form the subject of the dependent claims.

One aspect for solving the problem relates to an alignment device for aligning a beam propagation direction of a beam generating unit to an aligning axis of the alignment device, wherein the beam generating unit is mountable to the alignment device, the alignment device comprising a plurality of differently shaped cylindric housings inserted into each other; wherein:
- each cylindric housing comprises an outer surface around its respective cylinder axis and an inner cavity around a respective cavity axis extending through the respective cylindric housing;
- the inner cavity of each except a smallest of the cylindric housings is cylindric;
- the outer surface of each except a largest of the cylindric housings is cylindric and at least partially and rotatably arranged in the inner cavity of an adjacent one of the cylindric housings;
- the inner cavity of the smallest of the cylindric housings is configured to at least partially receive the beam generating unit;
- the cavity axis of each cylindric housing is arranged at an alignment angle >0° and/or eccentric to the cylinder axis of the respective cylindric housing; and
- the alignment axis of the alignment device corresponds to the cylindric axis of the largest of the cylindric housings.

The alignment device may be provided as a module of a beam system like an evanescent field reader. It may be provided as a separate and/or compact module for aligning the beam propagation direction of a beam generating unit to an aligning axis of the alignment device, thereby enabling calibration of the beam propagation direction of the beam generating unit outside of the beam system instead of using a permanent adjustment unit inside the beam system. This may simplify the calibration conditions. The externally calibrated beam generating unit mounted and aligned in the alignment device may then easily be attached to an already calibrated mounting unit of the beam system. Alternatively, the alignment device may also be used in an assembled state at the beam system like a common alignment unit described above.

Furthermore, the alignment of the beam propagation direction to the aligning axis of the alignment device may be simplified by a single or plural rotations of the adjacent cylindric housings. Indeed, the adjustment may be performed by rotations of the adjacent cylindric housings only and, thus, by very similar adjustment movements. This may simplify the adjustment over the known common adjustment units, wherein pitch, yaw, and translational adjustments usually require different adjustment movements.

The beam generating unit which may or may not be a part of the alignment device, may comprise a beam housing and a beam source being configured to generate a directed beam in the beam propagation direction. In this respect, at least a maximum intensity of the directed beam may propagate in a substantially linear direction, e.g., without or at least with no significant spreading in a radial direction perpendicular to the beam propagation direction.

The beam housing may comprise a predefined shape at its outer surface, wherein the outer shape of the beam housing defines a beam housing center axis. For a substantially cylindric beam housing, the beam housing center axis corresponds to the cylinder axis of the beam housing. The beam housing may, alternatively, be shaped differently including rectangular or triangular. It may comprise a consistent outer contour in direction of the beam housing center axis which enables a simple insertion of the beam housing in the direction of the beam housing center axis.

The beam source, which may be mounted permanently into the beam housing, may commonly be specified to emit the directed beam along the beam housing center axis of the beam housing. However, due to production tolerances, the real beam propagation direction is often angularly and/or translationally misaligned with respect to the beam housing center axis. This misalignment in angle and/or translation may be compensated by the alignment device by mounting the beam generating unit to the alignment device and then calibrating the beam propagation direction by respective rotational movements of the individual cylindric housings with respect to the adjacent cylindric housing.

The alignment device consists of and/or comprises a plurality of cylindric housings with inner cavities, wherein the cylindric housings are nestable and inserted into each other, e.g. like the shells of an onion The cylindric housings are named cylindric because their outer surfaces and/or their inner cavities are shaped as right or oblique circular cylinders with a circular base. Therein, only the outer surface of the largest housing and/or the inner cavity of the smallest housing are optionally cylindrically shaped, while all other outer surfaces and all other inner cavities of the plurality of cylindric housings comprise a circular cylindric shape.

Each of the cylindric housings may be provided at a different size, e.g., from the smallest one of the cylindric housings to the largest one of the cylindric housings. Each except the largest of the cylindric housings is at least partially inserted into the inner cavity of another one of the cylindric housings. Therein, the outer surface of the inserted cylindric housing may substantially correspond to the inner cavity of the cylindric housing it is inserted in, respectively.

Similarly, each except the smallest of the cylindric housings may at least partially accommodate another one of the cylindric housings in its inner cavity. Therein, the inner surface of the accommodating cylindric housing may substantially correspond to the outer surface of the inserted cylindric housing, respectively.

In the inserted state, the cylinder axis of the outer shape of the respectively inserted and smaller cylinder housing may substantially be aligned with the cavity axis of the inner shape of the respectively accommodating and larger cylinder housing. In the inserted state, the two cylindric housings inserted into each other may be rotated with respect to each other about the cavity axis of the respectively larger one of the two cylindric housings and/or about the cylinder axis of the smaller one of the two inserted cylindric housings.

These circular cylindric shapes enable a rotational movement of a respective smaller cylindric housing relative to an adjacent larger cylindric housing, wherein the cylinder radius of the outer surface of the smaller housing may be only slightly smaller than the cylinder radius of the inner cavity of the larger cylindric housing. The difference in the inner and outer cylinder radius of inserted cylindric housings and the tightening and feel of the respective adjacent cylindric housings may be realized according to the SN EN ISO 286-1 standard. For a precise centering, the respective adjacent cylindric housings are preferably assembled 'without the need of high force' according to the standard, which refers to a bore K7 and a shaft h6. As an example for a nominal diameter of 10mm, the respective maximum clearance of the outer surface diameter of the smaller cylindric housing and the inner cavity diameter of the larger cylindric housing may be 14µm and the minimum clearance may be an interference of 10µm, which may require some light force for assembly. This clearance may still enable a smooth rotational movement during the rotatably adjustment of the respective adjacent cylindric housings, while reducing a misalignment of the respective cavity axis of the larger cylindric housing to the cylinder axis of the smaller cylindric housing when tightening the rotational position of the respective cylindric housings after adjustment.

The cylindric housings may, e.g., be substantially shaped like rings and/or pipes. They may respectively comprise an outer cylinder diameter, at which their respective outer cylindric surface is provided. The outer shape may be provided as a right circular cylinder. The cylinder axis with respect to this outer cylinder diameter corresponds to the cylinder axis of the respective cylindric housing.

The cylindric housings may respectively comprise an inner cylinder diameter, at which their respective inner cavity is provided. The inner cavity may be provided as a right or as oblique circular cylinder. The cylinder axis with respect to this inner cylinder diameter corresponds to the cavity axis of the respective cylindric housing.

The smallest cylindric housing is configured to receive the beam generating unit. In case the beam generating unit comprises a cylindric beam housing, also the inner cavity of smallest cylindric housing may be provided cylindric. By arranging the beam generating unit at least partially in the inner cavity of the smallest of the cylindric housings, the beam propagation direction is arranged with respect to the center axis of the largest of the cylindric housing.

The cavity axis is misaligned to the cylinder axis of each cylindric housing in a controlled manner, this misalignment may include the cavity axis being angled and/or eccentric to the cylinder axis of each cylindric housing. The cylinder axis of each except the largest cylinder housing is substantially aligned with the cavity axis of the next larger cylinder housing. Thus, whenever a smaller one of two adjacent cylindric housings is rotated within the inner cavity of the larger cylindric housing, also the cavity axis of the smaller cylindric housing is rotated about the cavity axis of the larger cylindric housing. Depending on the controlled misalignment of these two cavity axes, the relative alignment of the two cavity axes of the two adjacent cylindric housings will be altered.

In particular, by rotating the smallest of the cylindric housings holding the beam generating unit within the inner cavity of the second smallest one of the cylindric housings, also the beam propagation direction is altered with respect to the cylinder axis of the second smallest one of the cylindric housings. Afterwards, the second smallest cylindric housing may be rotated with respect to the third smallest cylindric housing, thereby altering the beam propagation direction further and so on until the second largest of the cylindric housings is rotated within the inner cavity of the largest of the cylindric housings. Thereby, the beam propagation direction is altered with respect to the cylinder axis of the largest of the cylindric housings, corresponding to the aligning direction of the alignment device. Thus, the beam propagation direction may be aligned with the aligning direction of the alignment device.

The alignment device, in particular the largest of the cylindric housings, may be mounted to the beam system, e.g., to the evanescent filed reader, so that the aligning direction is directed in a predetermined direction, e.g., at a target point.

The alignment device comprises at least two cylindric housings. In case the beam propagation direction is only misaligned by an angle with respect to the beam housing center axis but not eccentric, two cylindric housings comprising angled cavity axes may be sufficient to adjust this misalignment. In a similar way, in case the beam propagation direction is only misaligned translationally with respect to the beam housing center axis, two cylindric housings comprising eccentric cavity axes may be sufficient to adjust this misalignment. In case the beam propagation direction is misaligned both angularly and translationally with respect to the beam housing center axis, two cylindric housings with angled cavity axes and two cylindric housings with eccentric cavity axes may be sufficient for compensating the angular and translational misalignment by the alignment device. Therein, one of the cylindric housings may comprise an angled and eccentric cavity axis. Thus, for compensating a both angular and translational misalignment, a minimum of four cylindric housings are preferred, two comprising an angled but concentric cavity axis, and two comprising an eccentric but straight cavity axis.

For compensating any misalignment, e.g., as in the above cases, the beam generating unit is (e.g., rotatably) mounted inside the inner cavity of the smallest cylindric housing and then rotated, e.g., together with none, one, some or all of the cylindric housings of the alignment device substantially about the aligning axis.

For such a configuration, single cylindric housings of the alignment device may be replaceable as in a modular system, wherein a set of respective cylindric housings with different predetermined alignment angles and eccentricities are available.

Furthermore, single cylindric housings, a plurality of the cylindric housings or all cylindric housings of the alignment device may be equipped with a motor configured to perform the rotational movement of the respective cylindric housing. The at least one motor is preferably an electrical motor, which in addition may be remotely controllable by an internal or external controlling device. For such a configuration, the alignment of the beam generating unit by the alignment device may be remotely controlled by the internal or external controlling device.

In an embodiment of the alignment device, the alignment device further comprises at least one angle alignment unit, wherein the at least one angle alignment unit comprises at least two adjacent cylindric housings, each with an alignment angle >0°. Therein, the alignment angles of two of the cylindric housings of the at least one angle alignment unit may be of the same size within a predetermined tolerance. The alignment angles of each of the at least two cylindric housings of the at least one angle alignment unit preferably match to the expected maximum angular misalignment of the beam propagation direction. For an exemplary expected angular misalignment of 3° of the beam propagation direction, the alignment angles of each of the at least two cylindric housings of the at least one angle alignment unit may be greater than about 2°, preferable in a range of about 2° to about 5° and more preferable about 3° and/or within a predetermined tolerance range of ±0.2°, preferable ±0.15° and more preferable ±0.05°.

At least one of the angle alignment units may be used to compensate any angular misalignment of the beam generating unit by rotating one of the at least two cylindric housings with respect to the other cylindric housings of the at least two cylindric housings of the respective angle alignment unit about the aligning axis. Optionally, two of the at least two cylindric housings of the respective angle alignment unit are rotated at the same time with respect to each other about the alignment axis. The two cylindric housings of the angle alignment unit are preferably arranged adjacent to each other. Their respectively rotational alignment with respect to the aligning axis is preferably adjusted as a pair for compensating the angular misalignment of the beam generating unit efficiently.

An alignment device with at least one angle alignment unit may enable a reliable compensation of an angular misalignment of the beam generating unit. It may, in particular, provide the advantage to render determining the angular misalignment of the beam generating unit in advance unnecessary by enabling continuous compensation in a predetermined angle alignment range of the angle alignment unit. The maximum angular misalignment value of the angle alignment range, which may be compensated by this angle alignment unit, is defined by the sum of all alignment angles of the at least two adjacent cylindric housings comprising the alignment angles >0°. The maximum value of the angle alignment range is therefore preferable above an expected maximum misalignment angle of the beam generating unit. For a beam generating unit comprising a laser as a beam source, such an expected maximum misalignment angle may be about 6° for an expected angular misalignment of 3° of the laser propagation direction.

In a preferable configuration of the alignment device, each of the at least one angle alignment unit comprises exactly two adjacent cylindric housings, each with the alignment angle >0°. For this case, a minimum angular misalignment value of the angle alignment range, which may be compensated by the angle alignment unit, is calculated by the greater alignment angle of the two adjacent cylindric housings minus the smaller alignment angle of the two adjacent cylindric housings. To enable a neutral angle alignment without angle compensation being applied for a beam generating unit being perfectly aligned and, thus, comprising no angular misalignment, the minimum angular misalignment value of the angle alignment range is preferably 0°. Therefore, the alignment angles of the two cylindric housings are preferable of the same size, at least within a predetermined tolerance.

To exclude a misalignment of the beam propagation direction caused by two alignment angles of two adjacent cylindric housings, which are not exactly of the same size, the angle alignment unit may comprise three adjacent cylindric housings with an alignment angle >0°. In such a configuration, a full continuous angle alignment range from 0° to the maximum value (sum of all alignment angles) may be compensated for, at least if the smallest alignment angle of the three adjacent cylindric housings is equal or greater than the greatest alignment angle of the three adjacent cylindric housings minus the second smallest alignment angle of the three adjacent cylindric housings.

While the alignment device may comprise an angle alignment unit with more than three adjacent cylindric housings with an alignment angle >0°, the number of cylindric housings to adjust may render adjusting more difficult and/or time consuming. Furthermore, the alignment device may become bulkier with an increasing number of cylindric housings. Thus, the angle alignment unit preferably comprises exactly two cylindric housings with similar alignment angles >0°, or at least not more than three cylindric housings with alignment angles >0°.

In a development of this embodiment of the alignment device, the alignment device comprises at least two angle alignment units, and wherein at least one of the alignment angles of the at least two cylindric housings of a first of the two angle alignment units is different to each of the alignment angles of the at least two cylindric housings of a second of the two angle alignment units.

The two angle alignment units may be used to adjust any misalignment angle of the beam generating unit at different scales. For example, the first of the two angle alignment units may comprise cylindric housings with larger alignment angles than the second one. It may be used first for a rough angle alignment, followed by an adjustment of the second alignment unit for providing a fine angle alignment. For example, while the second angle alignment unit may comprise cylindric housings with alignment angles of, e.g., about 3°, the first angle alignment unit may comprise cylindric housings with alignment angles greater than about 5°, preferably in a range of about 5° to about 10° and more preferably of about 6°. A configuration of an alignment device comprising more than one angle alignment unit may provide the advantage that a potential misalignment of the beam propagation direction caused by the first angle alignment unit is compensated by one or more additional angle alignment units.

In an embodiment of the alignment device, the alignment device further comprises at least one translation alignment unit, wherein the at least one translation alignment unit comprises at least two adjacent cylindric housings, each with an eccentricity of the cavity axis to the cylinder axis. The eccentricities of two of the cylindric housings of the at least one translation alignment unit may be of the same size within a predetermined tolerance. Therein, the eccentricities of each of the at least two cylindric housings of the at least one translation alignment unit may be greater than about 0.3 mm, preferable in a range of about 0.4 mm to about 0.7 mm, and more preferable about 0.5mm and/or within a predetermined tolerance range of ±0.1 mm, preferable ±0.05 mm and more preferable ±0.02 mm.

The translation alignment unit is preferably used after a compensation of an angular misalignment of the beam generating unit has been performed. By keeping the incident angle alignment unchanged, a remaining translation misalignment of the beam propagation direction with respect to a target point in a calibration space may be compensated and aligned by the translation alignment unit. In this respect, at least one of the translation alignment units may be used to compensate any translational misalignment of the beam generating unit by rotating one of the at least two cylindric housings of the respective translation alignment unit about the aligning axis. Optionally, two of the at least two cylindric housings of the respective translation alignment unit are rotated at the same time with respect to each other about the alignment axis. The two cylindric housings of the translation alignment unit are preferably arranged adjacent to each other. Their respectively rotational alignment with respect to the aligning axis is preferably adjusted as a pair for compensating the translational misalignment of the beam generating unit efficiently.

An alignment device with at least one translation alignment unit may enable a reliable compensation of a translational misalignment of the beam generating unit. It may, in particular, provide the advantage of rendering determining the translation misalignment of the beam generating unit in advance unnecessary by enabling continuous compensation in a predetermined translation alignment range of the translation alignment unit. The maximum translational misalignment value of this translation alignment range which may be compensated by the translation alignment unit is defined by the sum of all eccentricities of the at least two adjacent cylindric housings. The maximum translational misalignment value of the translation alignment range is therefore preferable above an expected maximum misalignment translation of the beam generating unit. For a beam generating unit comprising a laser as a beam source, such an expected maximum misalignment translation may be about 1 mm.

In a preferable configuration of the alignment device, each of the at least one translation alignment units comprises exactly two adjacent cylindric housings, each with an eccentricity of the cavity axis to the cylinder axis. For this case, a minimum translational misalignment value of the translation alignment range, which may be compensated by the translation alignment unit, is calculated by the greater eccentricity of the two adjacent cylindric housings minus the smaller one. To enable a neutral translation alignment without translation compensation being applied for a beam generating unit being perfectly aligned and comprising no translation misalignment, the minimum translational misalignment value of the translation alignment range is preferably 0 mm. Therefore, the eccentricities of the two cylindric housings are preferable of the same size and at least within a predetermined tolerance.

To exclude a misalignment of the beam propagation direction caused by two eccentricities of two adjacent cylindric housings, which are not exactly of the same size, the translation alignment unit may comprise exactly three adjacent cylindric housings with an eccentricity of the cavity axis to the cylinder axis. In such a configuration, a full continuous translation alignment range from 0 mm to the maximum value (sum of all eccentricities) may be compensated for, at least if the smallest eccentricity of the three adjacent cylindric housings is equal or greater than the greatest eccentricity of the three adjacent cylindric housings minus the second smallest eccentricity of the three adjacent cylindric housings.

While the alignment device may comprise a translation alignment unit with more than three adjacent cylindric housings with an eccentricity of the cavity axis to the cylinder axis, the number of cylindric housings to adjust may render adjusting more difficult. Furthermore, the alignment device may become bulkier with an increasing number of cylindric housings. Thus, the translation alignment unit preferably comprises exactly two cylindric housings with similar eccentricities, or at least not more than three eccentric cylindric.

In a further preferred embodiment of the alignment device, the alignment device comprises at least two translation alignment units, and wherein at least one of the eccentricities of the at least two cylindric housings of a first of the two translation alignment units is different to each of the eccentricities of the at least two cylindric housings of a second of the two translation alignment units.

The two translation alignment units may be used to adjust any eccentric misalignment of the beam generating unit at different scaling. For example, the first of the two translation alignment units may comprise cylindric housings with larger eccentricity than the second one. It may be used first for a rough translational alignment, followed by an adjustment of the second translation alignment unit for providing a finer translational alignment. For example, while the second translation alignment unit may comprise cylindric housings with eccentricities of, e.g., about 0.5mm, the first translation alignment unit may comprise cylindric housings with eccentricities greater than about 0.9 mm, preferable in a range of about 0.9 mm to about 1.5 mm and more preferable of about 1.0mm. A configuration of an alignment device comprising more than one translation alignment unit may provide the advantage that a potential misalignment of the beam propagation direction caused by the first translation alignment unit is compensated by one or more additional translation alignment units.

In a further embodiment of the alignment device, the alignment device comprises at least one angle alignment unit and at least one translation alignment unit. The at least one angle alignment unit and the at least one translation alignment unit are arranged adjacent to each other. Therein, the alignment device may comprise exactly four cylindric housings of which two comprise a cavity axis arranged at an alignment angle >0° to the cylinder axis of the respective cylindric housing and of which two comprise a cavity axis eccentric to the cylinder axis of the respective cylindric housing.

In this preferred configuration of the alignment device, both an angle and a translation misalignment of the beam generating unit is compensable. Additionally, the number of necessary alignment steps is kept low, thus enabling a compact and/or simple to operate alignment device. Such a configuration may enable adjusting the beam propagation direction of a mounted beam generation unit in at least four degrees of freedom. It may, in particular, enable adjusting the beam propagation direction in an up and/or down direction, in a left and/or right direction, by yawing and by pitching.

In a further embodiment of the alignment device, the cylinder axis and the cavity axis of each cylindric housing with an alignment angle >0° intersect in a center point of the respective cylindric housing. The center point of the cylindric housing may be provided as a center point of the outer surface of the respective cylindric housing being provided as a right circular cylinder, wherein the center point is arranged on the cylinder axis and/or center axis in the center between the two opposite base planes of the right circular cylinder.

The cylinder axis and the cavity axis of each cylindric housing with an alignment angle >0° intersecting in a center point of the respective cylindric housing enables separating the compensation of the angular misalignment from the compensation of the translational misalignment. It enables only adjusting the angular alignment of the beam propagation direction when rotating the cylinder housings with the alignment angle >0° without causing and translational altering of the beam propagation direction. Thereby, it enables reducing a translational misalignment of the beam generating unit during the angle alignment of the alignment device.

A translation misalignment due to the angle alignment of the alignment device may also be reduced by mounting and fitting the beam source at the center point of the smallest cylindric housing.

To avoid any translation misalignment due to the angle alignment of the alignment device, the center points of all cylindric housings may be configured to be located in a plane perpendicular to the alignment axis.

Similarly, also the cavity axis of each eccentric cylindric housings may only be eccentric but not angled. This enables separating the compensation of the translational misalignment from the compensation of the angular misalignment. It enables only adjusting the translational alignment of the beam propagation direction when rotating the cylinder housings with the eccentric cavity axis without causing any angular altering of the beam propagation direction.

In a further embodiment of the alignment device, the largest of the cylindric housings comprises a mounting protrusion. Therein, the mounting protrusion may comprise an inner cavity extending through the mounting protrusion and/or being arranged around the cylinder axis of the largest cylindric housing. Therein, the mounting protrusion may comprise an outer shape according to the shape of the inner cavity of the smallest of the cylindric housings and an inner cavity of the mounting protrusion around the cylinder axis of the largest of the cylindric housings for providing a passage through the mounting protrusion for the beam in beam propagation direction.

The mounting protrusion of the alignment device may enable a defined mounting of the alignment device to an external mounting unit of a calibration device and/or a beam system. The mounting protrusion may, e.g., be shaped like a ring and/or a pipe extending from the largest of the cylindric housings. It may comprise a substantially cylindric outer shape, e.g., similar to the outer shape of the beam housing of the beam generating unit. By substantially copying the shape of the inner cavity of the smallest of the cylindric housings, which preferably corresponds to the outer shape of the beam generating unit, the mounting protrusion may provide an aligned extension of the beam generating unit and/or its beam housing. The mounting protrusion may provide an aligned extension of the beam housing which may be mounted to the beam system instead of the (e.g., misaligned with respect to the beam propagation direction) beam housing itself. Thereby, the mounting protrusion of the alignment device may be coupled to standard beam systems instead of the beam housing, thereby enabling a simplified mounting to any standard external mounting unit like a beam system.

Furthermore, the mounting protrusion is preferable configured to enable attaching the alignment device to the external mounting unit so that the beam propagation direction is either directed to a positive or a negative direction of the alignment axis. For this, the mounting protrusion may comprise the inner cavity about the aligning direction corresponding to the cylinder axis of the largest cylindric housing.

In a further embodiment of the alignment device, the smallest cylindric housing comprises a mounting element for, in particular rotatably and/or detachably, mounting a beam housing of the beam generating unit in the inner cavity of the smallest cylindric housing.

Alternatively or additionally, for each pair of adjacent cylindric housings, the pair of adjacent cylindric housings comprises mounting elements for rotatably, and in particular detachably, mounting the outer surface of a smaller cylindric housing of the respective pair at least partially in the inner cavity of a larger cylindric housing of the respective pair of adjacent cylindric housings. Therein, the larger cylindric housing of each pair of adjacent cylindric housings may comprise a fastening screw with a cylindrical tip configured to be screwed in a radial direction and the smaller cylindric housing of each pair of adjacent cylindric housings may comprise a groove in the respective outer surface in a circumferential direction. Therein, the cylindrical tip of the fastening screw of the larger cylindric housing fits in the groove of the smaller cylindric housing and is configured to already protrude into the groove of the smaller cylindric housing during the adjustment of the alignment angle or the eccentricity, thereby rotatably, and in particular detachably, mounting the respective pair of adjacent cylindric housings to each other to prevent a relative movement of the respective larger and smaller cylindric housing in cylinder axis direction. Furthermore, after finishing the adjustment of the respective alignment angle or eccentricity, the fastening screw may be screwed in a radial direction towards the cylinder axis until the cylindric tip of the fastening screw reaches the bottom of the groove of the smaller cylindric housing to arrest the respective cylindric housings in the adjusted position to each other.

Generally, the mounting elements for rotatably, and in particular detachably, mounting two adjacent cylindric housings are not limited to a fastening screw protruding into a complementary groove, but may include all commonly used mounting elements known in the art, e.g., threads, pins, clipped connections, glues, and the like. However, threads and grooves are preferred as mounting elements for all cylindric housings, because they may enable a simple operation and reliable, reversible fixation of the mounting elements.

Furthermore, the cavity of the smallest cylindric housing is preferable configured to enable attaching the beam housing so that the beam propagation direction is either directed to a positive or a negative direction of the alignment axis.

A further aspect relates to a system for aiming a beam at a predetermined angle onto and/or at a predetermined point of a target object, the system comprising:
an alignment device according to the previous aspect;
a beam generating unit; and
the target object;
wherein the beam generating unit is configured to generate a directed beam in the beam propagation direction and is at least partially arranged in the inner cavity of the smallest cylindric housing of the alignment device; and
wherein the alignment device is configured to align the beam propagation direction to the aligning axis of the alignment device and at the predetermined angle and/or at the predetermined point of the target object.

The beam generating unit of the system may comprise a beam housing around a beam housing center axis and a beam source configured to generate the directed beam. The beam housing may comprise an outer shape substantially corresponding to the shape of the inner cavity of the smallest cylindric housing of the alignment device.

The system may comprise a block, wherein the block comprises a beam holder with an inner cavity around a beam holder center axis and a target holder configured to mechanically mount the target object to the block. The beam holder may be adjusted to aim the beam holder center axis to a predetermined point in a target plane of the target object at a predetermined angle. The largest cylindric housing of the alignment device may at least be partially arranged in the inner cavity of the beam holder and/or rotatably arranged around the colinear aligned beam holder center axis and aligning axis of the alignment device.

In an embodiment of the system, the generating unit is configured to generate a directed photon beam, a directed neutron beam, a directed ion beam, or a directed electromagnetic beam as the directed beam.

Generally, the configurable beam source is not limited to the specific beam sources listed above but may be provided as any physical source which enables a directed propagation of a physical waveform and/or particle stream, e.g., an acoustic wave and/or a fluid stream. However, as mentioned above, the beam source is preferably a beam source providing a directed beam comprising limited spatial dispersion and/or spreading only, so that a defined beam propagation direction may be identified and aligned with respect to the aligning axis of the alignment device.

In a further embodiment of the system, the position of the alignment device in an aligning axis direction is adjustable and/or a rotational position of the alignment device around the aligning axis is adjustable.

Such a configuration enables adjusting one or two additional degrees of freedom of the mounted beam generation unit. Adjusting the beam propagation direction in a forward/backward direction may enable an adjustment of a propagation length of the beam. Adjusting the beam propagation direction in a rolling direction, i.e., in the rotational position of the alignment device, may enable adjusting the polarization alignment of a photon source as beam generation unit.

In a further embodiment of the system, the system is provided as an evanescent field reader, the target object is provided as a transparent cuvette, and the beam generating unit is provided as a laser. Therein, the system further comprises a block to which the largest cylindric housing of the alignment device is mounted so that the beam propagation direction is aimed at the predetermined angle and/or at the predetermined point of the transparent cuvette. The evanescent field reader is the preferred application for the alignment device, wherein the alignment device comprising the laser is mounted to the, e.g., optical, block instead of the laser itself. The alignment device may render any further alignment unit as described in the introduction redundant. It may provide a more comfortable and/or more precise adjustment of the beam propagation direction of the laser than the common alignment units.

A further aspect relates to a method of aligning a beam propagation direction of a beam generating unit to an aligning axis of an alignment device, comprising the steps:
- providing the alignment device to the previously described aspect, wherein the differently shaped cylindric housings are inserted into each other;
- mounting the beam generating unit to the alignment device; and
- rotating the beam generating unit and/or at least one of the cylindric housings about the aligning axis until the beam propagation direction substantially is aligned to the aligning axis of the alignment device.

The method relates to operating the alignment device according to the previous aspect. Therefore, the description of the alignment device applies to the method and vice versa.

In an embodiment of the method, the method further comprises:
- attaching the largest cylindric housing of the alignment device to a calibration unit so that a beam generated by the beam generating unit in the beam propagation direction is aimed at a calibration target point of the calibration unit; and/or
- compensating an angular misalignment of the propagation direction to the aligning axis by rotating at least one of the cylindric housings comprising an alignment angle >0° about the aligning axis; and/or
- compensating a collinear misalignment of the propagation direction to the aligning axis by rotating at least one of the cylindric housings comprising an eccentric cavity axis about the aligning axis; and/or
- rotating the largest cylindric housing of the alignment device about the aligning axis for adjusting a polarization direction of the beam.

These steps describe how the alignment device is operated for compensating possible misalignment components. For example, the calibration unit may enable an external aligning of the beam generation unit, which may render the alignment process simpler.

In an embodiment of the method, the method further comprises at least one of the following steps:
- assembling the plurality of cylindric housing into each other and rotatably, and in particular detachably, mounting the respective pair of adjacent cylindric housings to each other to prevent a relative movement of the respective larger and smaller cylindric housing in the cavity axis direction of the larger cylindric housing;
- attaching a beam housing of a beam generating unit into the inner cavity of the smallest cylindric housing of the alignment device and arresting the rotational position of the beam housing by a mounting element to prevent a relative movement of the beam housing with respect to the inner cavity of the smallest cylindric housing in a rotational direction;
- attaching the alignment device to a calibration unit and generating a beam by the beam generating unit;
- repeating the following steps of beam adjustment until the beam propagation direction is aligned to the aligning axis of the alignment device:
   - rotating the largest one of the cylindric housings of the angle alignment unit until the angular misalignment of the beam propagation direction is at a minimum and arresting the rotational position of the angle alignment unit by a mounting element to prevent a relative movement of the cylindric housings of the angle alignment unit in a rotational direction;
   - rotating the largest one of the cylindric housings of the translation alignment unit until the translation misalignment of the beam propagation direction is at a minimum and arresting the rotational position of the translation alignment unit by a mounting element to prevent a relative movement of the cylindric housings of the translation alignment unit in a rotational direction;
   - in case the angular misalignment or the translation misalignment is not fully compensated, detaching the mounting elements of the angle alignment unit and the translation alignment unit, detaching the mounting element which arrests the beam housing of the beam generating unit, rotating the beam housing of the beam generating unit by 180° with respect to the inner cavity of the smallest cylindric housing and repeating the steps of beam adjustment;
- determining the polarization of the beam in the beam propagation direction;
- removing the alignment device from the calibration unit;
- attaching the alignment device to a beam system;
- adjusting the polarization of the beam by rotating the alignment device in the beam system around the alignment axis of the alignment device;
- adjusting the focus of the beam by adjusting the position of the alignment device in the beam system in a beam propagation direction.

In an embodiment, the alignment device comprises at least one cylindric housing with an alignment angle >0° and at least one cylindric housing with an eccentricity of the cavity axis to the cylinder axis, and the method further comprises at least one of the following steps:
attaching a beam housing of a beam generating unit into the inner cavity of the smallest cylindric housing of the alignment device;
attaching the largest cylindric housing of the alignment device into a calibration cavity of a rectangular calibration unit; wherein an outlet point of a beam generated by the beam generating unit is located in a first xy-plane of the calibration unit and a calibration target point is located in a second xy-plane of the calibration unit, wherein the first xy-plane and the second xy-plane are separated from each other by a predetermined calibration distance in a z-direction of the calibration unit and wherein xy-coordinates of the outlet point correspond to xy-coordinates of the calibration target point;
generating a beam by the beam generating unit;
detecting, for an intersection of the beam and the second xy-plane, xy-coordinates of a first deviation point in the second xy-plane;
calculating a deviation angle of the beam based on the outlet point, the target point and the first deviation point;
compensating the deviation angle by rotating the beam housing with respect to the at least one cylindric housing of the alignment device with an alignment angle >0°; detecting, for an intersection of the beam and the second xy-plane, xy-coordinates of a second deviation point in the second xy-plane;
calculating a deviation translation of the beam based on the outlet point, the target point and the second deviation point; and
compensating the deviation translation by rotating the beam housing with respect to the at least one cylindric housing of the alignment device with an eccentricity of the cavity axis to the cylinder axis.

The above statements may apply to any of the above aspects.

In the following, individual embodiments for solving the problem are described by way of example with reference to the figures. Some of the described individual embodiments include features that are not absolutely necessary for implementing the claimed subject matter, but which provide desired properties in certain applications. Thus, embodiments that do not comprise all features of the embodiments described below also shall be regarded to fall under the disclosed technical teaching. Furthermore, in order to avoid unnecessary repetition, certain features are only mentioned in relation to individual embodiments described below. It is pointed out that the individual embodiments should therefore not only be considered individually but should also be viewed as a whole. Based on this synopsis, individual embodiments can also be modified by incorporating individual or multiple features of other embodiments. The individual embodiments described below may be systematically combined with individual or multiple features that are described in relation to other embodiments.

### Brief description of the drawings

- Figure 1: shows a schematic layout of an evanescent field reader.
- Figure 2: shows an isometric view of an assembled alignment device according to the present invention.
- Figure 3: shows an explosion side view of an alignment device according to the present invention.
- Figure 4: shows an explosion isometric view of an alignment device according to the present invention.
- Figure 5: shows a back view of an alignment device according to the present invention.
- Figure 6: shows a schematic explosion isometric view of an alignment device according to the present invention.
- Figure 7: shows a schematic cross-sectional explosion view of an alignment device according to the present invention.
- Figure 8: shows a schematic cross-sectional view of an assembled alignment device according to the present invention.
- Figure 9: shows a schematic cross-sectional view of a cylindric housing with an alignment angle >0° according to the present invention.
- Figure 10: shows a schematic cross-sectional view of an assembled angle alignment unit according to the present invention.
- Figure 11: shows a schematic back view of a cylindric housing with an eccentricity according to the present invention.
- Figure 12: shows a schematic back view of an assembled translation alignment unit according to the present invention.
- Figure 13: shows a schematic cross-sectional view of an assembled translation alignment unit according to the present invention.
- Figure 14: shows a front-side view and a cross-sectional view of an assembled alignment device according to the present invention.
- Figure 15: shows a front-side view and a cross-sectional view of an assembled angle alignment unit according to the present invention.
- Figure 16: shows a front-side view and a cross-sectional view of an assembled translation alignment unit according to the present invention.
- Figure 17: shows an isometric view of a calibration unit.
- Figure 18: shows a schematic cross-sectional view of an alignment device attached to a mounting unit of a system according to the present invention.

### Detailed description of the drawings

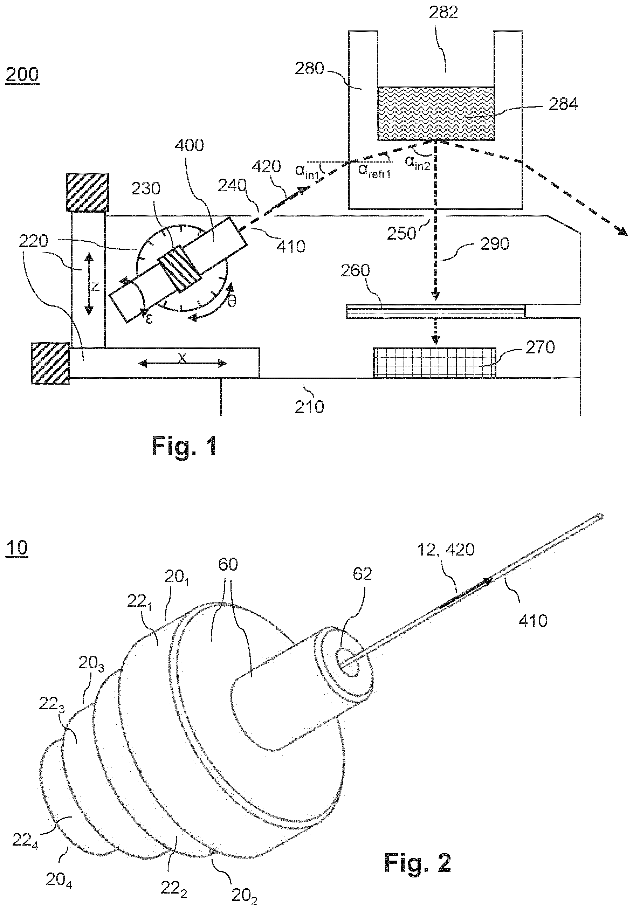

**Figure 1** shows a schematic layout of an evanescent field reader 200 as known in the art. The evanescent field reader 200 comprises an optical block 210 and a transparent cuvette 280 mechanically fixed to the block 210. The cuvette 280 contains one or several cuvette wells 282 that can each be filled with a liquid 284, which is usually an aqueous solution with fluorophores in it. A beam generating unit 400 with a diode laser as a beam source and with collimation optics to generate a directed laser beam 410 is used to illuminate the bottom of a cuvette well 282 under the condition of total reflection.

The beam generating unit 400 is attached to a mechanical laser mounting 230 of an adjustment unit 220, which is part of the optical block 210. The diameter of the directed laser beam 410, generated by the beam generating unit 400 in a beam propagation direction 420, is controlled by an aperture 240 of the optical block 210.

The adjusted laser beam 410 hits a predetermined target point at an interface of air and a first outer cuvette wall under a first angle of incidence αᵢₙ₁ and is refracted under a refraction angle α_{refr1}. The refracted laser beam then hits a target point, preferably at a centerpoint, of the cuvette well 282 at an interface of an inner cuvette wall and the liquid 284 under a second angle of incidence αᵢₙ₂. Under the condition of total reflection at the target point of the cuvette well 282, the refracted laser beam is reflected totally, directed to a second outer cuvette wall and exits the cuvette 280. Fluorescent molecules are excited within the illuminated area at the target point of the cuvette well 282 by the evanescent field of the laser beam. The emitted fluorescence light is characterized by an essentially isotropic distribution at a slightly longer wavelength as compared to the laser excitation light. A small fraction of the fluorescence light 290, selected by a diaphragm 250, leaves the bottom of the cuvette well 282. One or more interference filters 260 are used to eliminate stray light from the laser beam generated at the interface between the liquid 284 and the bottom of the cuvette and within the cuvette material. The intensity of the thus filtered fluorescence beam is measured by a detector 270, usually a photomultiplier or photodiode.

For aligning the laser beam 410 within the evanescent field reader 200 so that it is aimed at an outer target point at the first outer cuvette wall, the adjustment unit 220 allows to align the propagation direction of the laser beam 410 in six degrees of freedoms (x,y,z,θ,ϕ,ε) with respect to, e.g., said outer target point and/or the target point at the bottom of the cuvette well 282. The y-axis and the rotation axis ϕ for adjusting a yawing are arranged perpendicular to the x-z plane and not shown in Figure 1. An adjustment in θ-direction may be used for adjusting a pitching and/or for ensuring that the angle αᵢₙ₂ is larger than a critical angle α_{Total} for total reflection. A fine adjustment of angle αᵢₙ₂ allows controlling the depth of the evanescent field at the interface from the cuvette well 282 to liquid 284. An adjustment in x-, y-, z-, and ϕ-direction allows aligning a propagation direction 420 of the laser beam 410 at the interface from the cuvette well 282 to liquid 284 with the target point of the cuvette well 282. An alignment in ε-direction allows aligning the polarization of the laser beam 410. This can be useful for optimizing the transmission of the laser beam into the cuvette, particularly if the angle of incidence αᵢₙ₁ is close to Brewster's angle.

Generally, the beam propagation direction 420 of gain-guided laser diodes with collimators is not sufficiently aligned with respect to a housing of the beam generating unit 400. Said alignment may be improved by the adjustment unit 220 of the evanescent field reader 200. For different beam generating units 400, arbitrary deviations between 0-3 mrad are measured. Therefore, the propagation direction of each beam generating unit requires individual adjustment.

Common adjustment units 220 including traditional x, y, z -translation stages with micrometer precision and rotary alignment stages with < 1 mrad precision are regularly rather bulky and require access from at least three different directions. The invention aims at improving the internal adjustment unit 220 of a beam system like the evanescent field reader 200, e.g., by an external and/or mountable alignment device 10 as described below with reference to the figures 2 to 18.

**Figures 2 to 5** show different views of an embodiment of an alignment device 10 according to the present invention comprising four cylindric housings 20₁, 20₂, 20₃ and 20₄. A beam generating unit 400 is attachable to the alignment device 10 and may be part of the alignment device 10 or provided as a separate component.

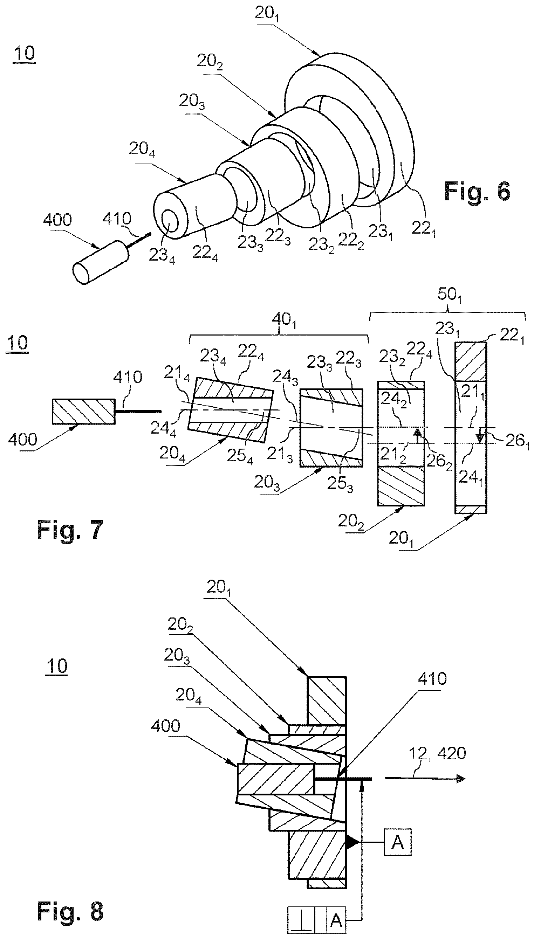

An outer surface 22₁, 22₂, 22₃ and 22₄ of each of the four cylindric housings 20₁, 20₂, 20₃ and 20₄ is provided as a right circular cylinder around a respective cylinder axis 21₁, 21₂, 21₃ and 21₄ (cf. Fig. 7). The cylindric housings 20₁, 20₂, 20₃ and 20₄ are differently shaped, respectively. For example, each cylindric housings 20₁, 20₂, 20₃ and 20₄ comprises a different cylinder radius from the respective cylinder axis 21₁, 21₂, 21₃ and 21₄ to the respective outer surface 22₁, 22₂, 22₃ and 22₄ of the respective cylindric housings 20₁, 20₂, 20₃ and 20₄. Therein, the respective cylinder radius of the outer surfaces 22₁ to 22₄ is decreasing from cylindric housing 20₁ to 20₄. Thus, cylindric housing 20₁ is provided as the largest and cylindric housing 20₄ as the smallest of the cylindric housings 20₁ to 20₄.

Each of the cylindric housings 20₁, 20₂, 20₃ and 20₄ comprises a cylindric inner cavity 23₁, 23₂, 23₃ and 23₄, respectively, being shaped as circular cylinder around a respective cavity axis 24₁, 24₂, 24₃ and 24₄. Each inner cavity 23₁, 23₂, 23₃ and 23₄ extends through the whole cylindric housings 20₁, 20₂, 20₃ and 20₄ it is provided in. Also the inner cavities 23₁ to 23₄ of the cylindric housings 20₁ to 20₄ are all differently shaped, respectively. For example, each inner cavities 23₁ to 23₄ comprises a different inner radius from the respective cavity axis 24₁ to 24₄ to the inner contour of the respective inner cavities 23₁ to 23₄. The respective inner radius of each inner cavity 23₁ to 23₄ is decreasing from cylindric housing 20₁ to 20₄.

The inner radii of the inner cavities 23₁, 23₂, 23₃ substantially correspond to the respective cylinder radii of the outer surfaces 22₂, 22s and 22₄. Thus, the cylindric housings 20₂, 20₃ and 20₄ are partially arranged and/or arrangeable in the respective inner cavities 23₁, 23₂, 23₃ in a nested relationship.

The beam generating unit 400 comprises a beam housing being shaped as a right circular cylinder in the shown embodiment. The inner radius of the inner cavity 23₄ substantially correspond to a cylinder radius of the beam housing of the beam generating unit 400, so that the beam generating unit 400 is arrangeable in the inner cavity 23₄ of the smallest cylindric housing 20₄.

The largest cylindric housing 20₁ comprises a mounting protrusion 60 with a mounting cavity 62 extending through the mounting protrusion 60 and being arranged around the cylinder axis 21₁ (cf. Fig. 7) of the largest cylindric housing 20₁. The mounting protrusion 60 may comprise an outer shape similar to and/or according to the inner shape of the inner cavity 23₄ of the smallest of the cylindric housings 20₄ and/or to the outer shape of the beam housing of the beam generating unit 400.

**Figure 2** shows an isometric half frontal view of the assembled alignment device 10. Therein, the four cylindric housings 20₁, 20₂, 20₃ and 20₄ are partially and rotatably arranged in each other and the beam generating unit 400, which is not shown in Fig. 2, is mounted to the alignment device 10 in the inner cavity 23₄ of the smallest cylindric housing 20₄ and generating a beam 410 in a beam propagation direction 420 of the beam. In the aligned state shown in Fig. 2, said beam propagation direction 420 is aligned with an alignment axis 12 and/or with the outer surface 22₁ of the largest cylindric housing 20₁.

The mounting protrusion 60 is attached to the largest cylindric housing 20₁ at a nearly closed end of the inner cavity 23₁ of the largest cylindric housing 20₁ so that the mounting protrusion 60 and the largest cylindric housing 20₁ share the cylinder axis 21₁ of the largest cylindric housing 20₁ as a common cylinder axis. The right circular cylinder of the mounting protrusion 60 comprises a cylinder radius similar and/or according to inner radius of the inner cavity 23₄ of the smallest cylindric housing 20₄ and/or to the cylinder radius of the beam housing of the beam generating unit 400. The mounting cavity 62 extends through the mounting protrusion 60 and the nearly closed end of the inner cavity 23₁ of the largest cylindric housing 20₁ and is arranged and/or centered around the cylinder axis 21₁ of the largest cylindric housing 20₁.

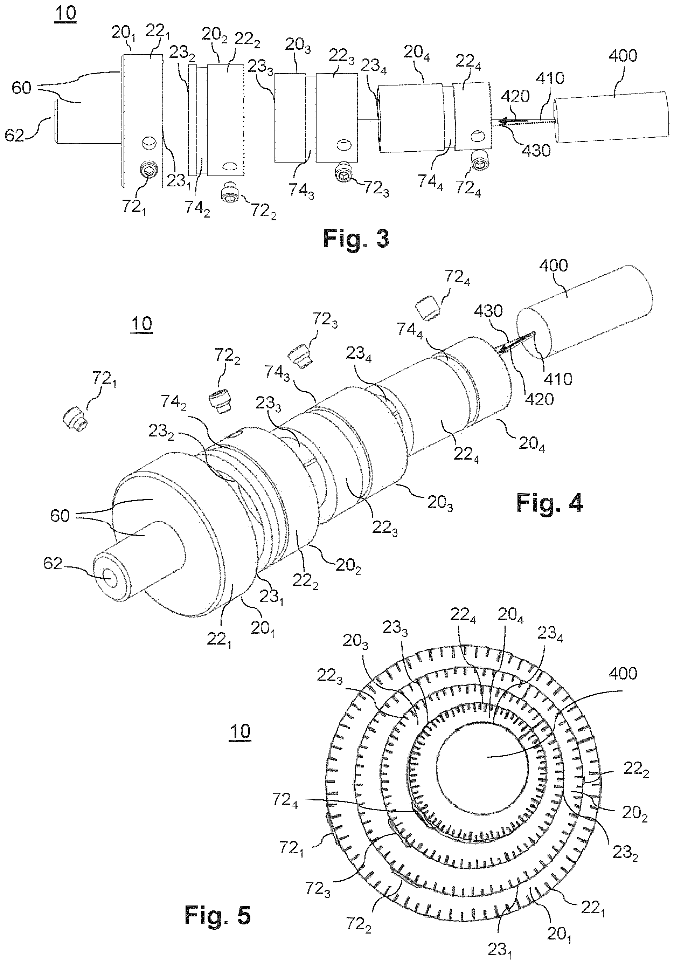

**Figures 3 and 4** show an exploded side view and an exploded isometric view of the unassembled alignment device 10 of figure 2. In these exploded views, the sections of the cylindric housings 20₂, 20₃ and 20₄ which are arranged in the inner cavities 23₁, 23₂ and 23₃ of the respective larger adjacent cylindric housings 20₁, 20₂ and 20₃ in the assembled state are shown.

As shown in Figs. 3 and 4, the outer surfaces 22₂, 22₃ and 22₄ respectively comprise grooves 74₂, 74₃ and 74₄ circumferential to the cylinder axis 21₂, 21₃ and 21₄, which in an assembled alignment device 10 act as mounting elements 70₂, 70s and 70₄ in combination with fastening screws 72₁, 72₂ and 72s of the respective larger adjacent cylindric housing 20₁, 20₂ and 20₃ for rotatable mounting the cylindric housings 20₁, 20₂, 20₃ and 20₄ to each other. For fastening the mounting elements 70₂, 70₃ and 70₄, the fastening screws 72₁, 72₂ and 72₃ are respectively fit in the grooves 74₂, 74₃ and 74₄. Fastening screw 72₄ acts as a single mounting element for rotatable mounting the cylindric housing 20₄ to the beam generating unit 400.

Furthermore, figures 3 and 4 show the beam generating unit 400 with a beam propagation direction 420 of the beam 410 misaligned with respect to a beam housing center axis 430 corresponding to the cylinder axis of the beam housing. The misalignment may encompass an angular misalignment and a translational misalignment.

**Figure 5** shows a back view of the alignment device 10 of figures 2 to 4 in an assembled state. Therein, the beam generating unit 400 is mounted in the inner cavity 23₄ of cylindric housing 20₄. The back side shown in Fig. 5 of the two smaller and/or smallest cylindric housings 20₁ and 20₂ comprise a graduation for an angle alignment and the back side of the two larger and/or largest cylindric housings 20₃ and 20₄ comprise a graduation for a translation alignment.

**Figures 6 to 8** show different schematic views of an alignment device 10 similar to the one of figures 2 to 5. Therein, the mounting protrusion 60 is omitted.

In **Figure 6****,** the alignment device 10 and its cylindric housings 20₁, 20₂, 20₃ and 20₄ are shown in a schematic exploded isometric view allowing an inside view of the respective inner cavities 23₁, 23₂, 23₃ and 23₄.

**Figure 7** shows a schematic cross-sectional exploded view of the alignment device 10 shown in Figure 6. In this cross-sectional view, the cylinder axes 21₁, 21₂, 21₃ and 21₄ and the cavity axes 24₁, 24₂, 24₃ and 24₄ of each cylindric housing 20₁, 20₂, 20₃ and 20₄ is shown.

The inner cavities of the 23₃ and 23₄ of the smaller and/or smallest cylindric housings 20₃ and 20₄ are provided as oblique circular cylinders with a circular base. Thus, for the smaller and/or smallest cylindric housings 20₃ and 20₄, the respective cylinder axis 21₃ and 21₄ intersect with the respective cavity axis 24s and 24₄ under an alignment angle 25₃ and 25₄ greater than 0°. These smaller and/or smallest cylindric housings 20₃ and 20₄ are provided as an angle alignment unit 40₁ and may be used for compensating a potential angular misalignment of the beam propagation direction 420 of the beam 410 emitted from the beam generating unit 400.

The inner cavities of the 23₁ and 23₂ of the larger and/or largest cylindric housings 20₁ and 20₂ are provided as right circular cylinders with a circular base. Thus, for the larger and/or largest cylindric housings 20₁ and 20₁, the cylinder axes 21₁ and 21₂ are respectively parallel to cavity axes 24₁ and 24₂ at a translational distance, or eccentricity 26₁ and 26₂. These larger and/or largest cylindric housings 20₁ and 20₂ are provided as a translation alignment unit 50₁ and may be used for compensating a potential translational misalignment of the beam propagation direction 420 of the beam 410 generated by the beam generating unit 400 with respect to the alignment axis 12.

The beam propagation direction 420 of the beam 410 generated by the beam generating unit 400 in figures 6 to 8 is shown correctly aligned with the beam housing center axis 430. In this exceptional case, wherein the laser beam is not misaligned, no angular and/or translational compensation is required by the angle alignment unit 40₁ and/or the translation alignment unit 50₁ of the alignment device 10.

In order to allow no angle alignment by the alignment unit 40₁, the cylindric housings 20₃ and 20₄ are rotated with respect to each other so that their alignment angles 25₃ and 25₄ add up to 0° as shown in figure 7. In this rotational position, said alignment angles 25₃ and 25₄ compensate and/or cancel each other. In order to achieve no translation alignment by the translation unit 40₁, the cylindric housings 20₁ and 20₂ are rotated with respect to each other so that their eccentricities 26₁ and 26₂ add up to 0 mm as shown in figure 7. In this rotational position, said eccentricities 26₁ and 26₂ compensate and/or cancel each other.

**Figure 8** shows a sectional view of the alignment device 10. Therein, the beam generating unit 400 and the cylindric housings 20₁, 20₂, 20₃ and 20₄ are mounted in the respective inner cavities 23₁, 23₂, 23₃ and 23₄ of the cylindric housings 20₁, 20₂, 20₃ and 20₄. The beam propagation direction 420 of the beam 410 of the beam generating unit 400 mounted to the alignment device 10 is aligned to the alignment axis 12 of the alignment device 10.

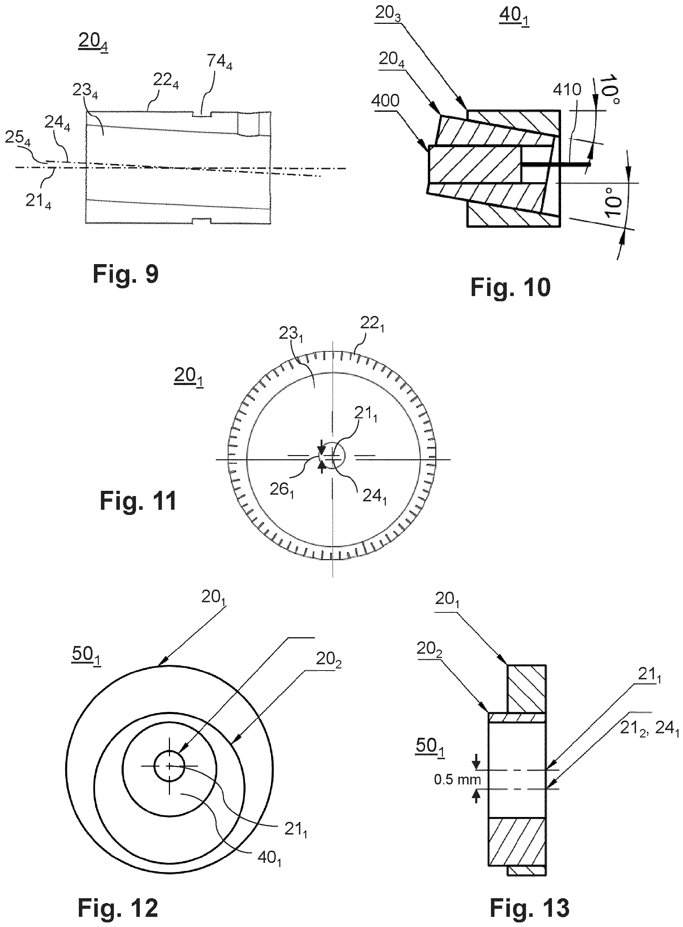

**Figure 9** shows a more detailed schematic cross-sectional view of the smallest cylindric housing 20₄ with an alignment angle 25₄ >0°. It comprises the groove 74₄ and a bore for fixing the beam generating unit 400 within its inner cavity 23₄.

**Figure 10** shows an isolated schematic cross-sectional view of an assembled angle alignment unit 40₁ comprising cylindric housings 20₃ and 20₄ with alignment angles 25₃ and 25₄ 10°, respectively. The cylindric housings 20₃ and 20₄ are counter-rotated around the cylinder axis 21₄ and the cavity axis 24₄ by, e.g., 180° so that the alignment angles 25₃ and 25₄ add up to 0° for the entire angle alignment unit 40₁. In this minimal state, the angle alignment unit 40₁ does not alter the alignment of the beam propagation direction 420. However, the alignment unit 40₁ may be arranged in different states not shown in Fig. 10, wherein the two cylindric housings 20₃ and 20₄ are arranged in another rotational position with respect to each other. For example, in an adjustment position of the cylindric housings 20₃ and 20₄ without rotation around the cylinder axis 21₄ and the cavity axis 24₄ (e.g., 0°), the alignment angles 25₃ and 25₄ add up to a maximum angle of 20° for the entire angle alignment unit 40₁. In this maximal state, the angle alignment unit 40₁ may alter the alignment of the beam propagation direction 420 for the sum of the two alignment angles 25₃ and 25₄, i.e., 20° in the shown embodiment. Other adjustment positions between the minimal and maximal state of the cylindric housings 20₃ and 20₄ within a relative rotation of, e.g., - 180° to 180°, enable a continuous alignment angle of the entire angle alignment unit 40₁ from a minimum of 0° to a maximum of 20°.

**Figure 11** shows a schematic back view of the largest cylindric housing 20₁ with an eccentricity 26₁ >0 mm. In particular, the cavity axis 24₁ is eccentrically positioned with respect to the center axis 21₁.

**Figure 12** shows a schematic back view of an assembled translation alignment unit 50₁, wherein the smaller cylindric housing 20₂ with an eccentricity 26₂ is mounted in the inner cavity 23₁ of the larger cylindric housing 20₁. Inside the inner cavity 23₂ of the smaller cylindric housing 20₂, an angle alignment unit 40₁ with a beam generation unit 400 is mounted.

**Figure 13** shows a schematic cross-sectional view of the translation alignment unit 50₁ of figure 12 without the angle alignment unit 40₁.

The cylindric housings 20₁ and 20₂ of the embodiment shown in figures 12 and 13 with eccentricities 26₁ and 26₂ are provided with an eccentricity of 0.5 mm, respectively. The cylindric housings 20₁ and 20₂ are counter-rotated around the cylinder axis 21₂ and the cavity axis 24₁ by, e.g., 180°, wherein the eccentricities 26₁ and 26₂ add up to 0 mm for the entire translation alignment unit 50₁. In this minimal state, the translation alignment unit 50₁ does not alter the alignment of the beam propagation direction 420. However, the translation alignment unit 50₁ may be arranged in different states not shown in Fig. 13, wherein the two cylindric housings 20₁ and 20₂ are arranged in another rotational position with respect to each other. For example, in an adjustment position of the cylindric housings 20₁ and 20₂ without rotation around the cylinder axis 21₂ and the cavity axis 24₁ (e.g., 0°), the eccentricities 26₁ and 26₂ add up to a maximum of 1 mm for the entire translation alignment unit 50₁. In this maximal state, the translation alignment unit 50₁ may alter the alignment of the beam propagation direction 420 for the sum of the two eccentricities 26₁ and 26₂, i.e., 1mm in the shown embodiment. Other adjustment positions of the cylindric housings 20₁ and 20₂, e.g., within a relative rotation of -180° to 180°, result in a continuous alignment eccentricity of the entire translation alignment unit 50₁ from a minimum of 0mm to a maximum of 1 mm.

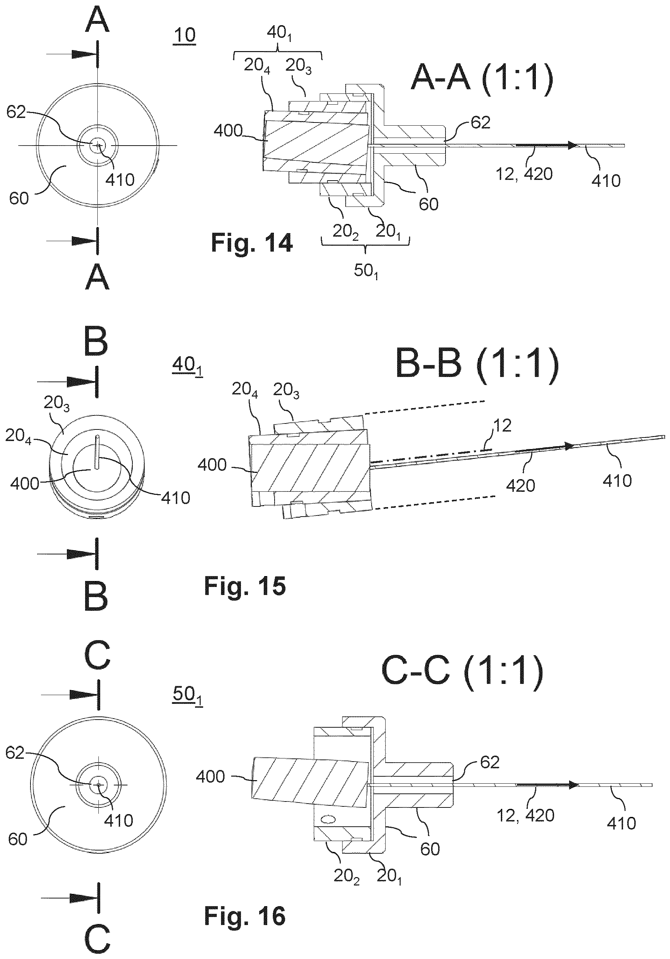

**Figures 14 to 16** respectively show front-side and cross-sectional views of the alignment device 10, as introduced in figures 2 to 5, and of its angle alignment unit 40₁ and translation alignment unit 50₁. The beam generating unit 400 shown in figures 14 to 15 generates a beam 410 with a beam propagation direction 420 misaligned with respect to the beam housing center axis 430. The misalignment of the beam 410 is compensated by accordingly adjusting the angle alignment unit 40₁ with its rotatable cylindric housings 20₃ and 20₄ and by adjusting the translation alignment unit 50₁ with its rotatable cylindric housings 20₁ and 20₂ as shown in **Figure 14****.** In the aligned state, the beam propagation direction 420 is colinear with the alignment axis 12 of the alignment device 10.

In **Figures 15 and 16****,** the stepwise process of alignment of the beam propagation direction 420 of a beam generating unit 400 to an aligning axis 12 of the alignment device 10 is shown.

In a first step, e.g., an angle aligning step, shown in **Figure 15****,** the adjacent cylindric housings 20₃ and 20₄ of the angle alignment unit 40₁ are rotated about the cylinder axis 21₄ and the cavity axis 24₃ with respect to each other until the beam propagation direction 420 is parallel with respect to the outer surface 20₃ of the cylindric housing 20s, but not yet colinear to the alignment axis 12 of the alignment device 12. Therein, the angle may get aligned by only rotating the smallest cylindric housing 20₄ within the inner cavity 23₃ of the second smallest cylindric housing 20s. Thus, a single adjustment movement of the relative rotational position of the two cylindric housings 20₃ and 20₄ angle alignment unit 40₁ may be sufficient to adjust the angular misalignment.

In an optional polarization aligning step, the second smallest cylindric housing 20s may be rotated within the inner cavity 23₂ of the next largest cylindric housing 20₂ (not shown in Fig. 15). Thereby, orientation of a polarization of the beam may be adjusted

In a second step, e.g., an eccentricity aligning step, shown in **Figure 16****,** the adjacent cylindric housings 20₁ and 20₂ of the translation alignment unit 50₁ are rotated about the cylinder axis 21₂ and the cavity axis 24₁ with respect to each other, until the beam propagation direction 420 is parallel and/or colinear with respect to the outer surface 20₁ of the cylindric housing 20₁ and colinear to the alignment axis 12 of the alignment device 12. Therein, the translational misalignment may get compensated by only rotating the smaller cylindric housing 20₂ within the inner cavity 23₁ of the largest cylindric housing 20₁. Thus, a single adjustment movement of the relative rotational position of the two cylindric housings 20₁ and 20₂ of the translation alignment unit 50₁ may be sufficient to adjust the translational misalignment.

After both the angle aligning step and the eccentricity aligning step, the beam propagation direction 420 is arranged colinear to the alignment axis 12.

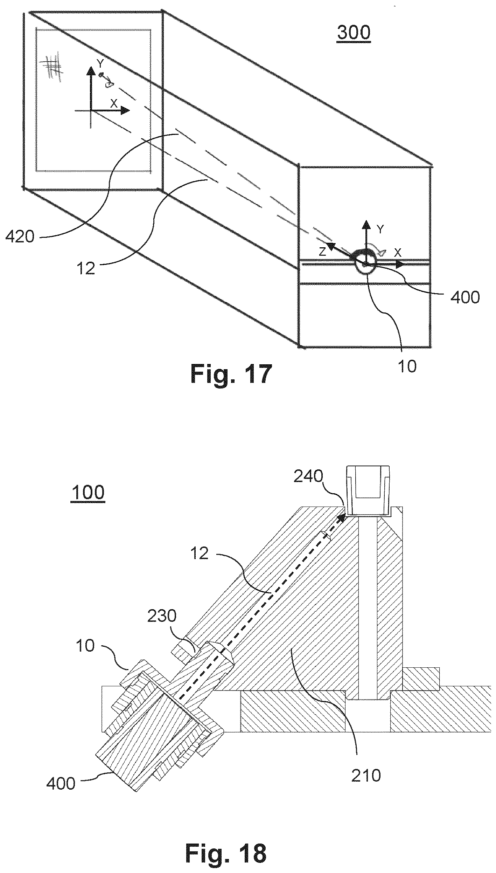

**Figure 17** shows an isometric view of a calibration unit 300 for calibrating the beam propagation direction 420 of a beam generating unit 400 with respect to an aligning axis 12 of the alignment device 10 as shown in Figures 2 to 16.

In the process of calibration, the beam housing of the beam generating unit 400 is mounted into the inner cavity 23₄ of the smallest cylindric housing 20₄ of the alignment device 10 and the mounting protrusion 60 of the alignment device 10 then is mounted into a calibration cavity of the rectangular calibration unit 300. When mounted, an outlet point of the beam 410 generated by the beam generating unit 400 is located in a first xy-plane of the calibration unit 300 and a calibration target point is located in a second xy-plane of the calibration unit 300, wherein the first xy-plane and the second xy-plane are separated from each other by a predetermined calibration distance in a z-direction of the calibration unit and wherein xy-coordinates of the outlet point correspond to xy-coordinates of the calibration target point.

In a next step, a beam 410 is generated by the beam generating unit 400 and an intersection of the beam 410 and the second xy-plane is detectable in xy-coordinates of a first deviation point in the second xy-plane. Based on the outlet point, the target point and the first deviation point, a deviation angle of the beam may be calculated. This deviation angle, if any, is then compensated by rotating the cylindric housings 20₃ and 20₄ of the angle alignment unit 40₁ of the alignment device 10, e.g., about the cylinder axis 21₄ and the cavity axis 24s. After compensation of the angular misalignment of the beam 410, the beam propagation direction 420 is arranged at least parallel with respect to the alignment axis 12 of the alignment device 10.

The actual intersection of the angle aligned beam 410 in the second xy-plane is then detected a second time and xy-coordinates of a second deviation point in the second xy-plane are determined. Based on the outlet point, the target point and the second deviation point, a deviation translation of the beam 410 may be calculated and the deviation translation, if any, is compensated by rotating the cylindric housings 20₁ and 20₂ of the translation alignment unit 50₁ of the alignment device 10 around the cylinder axis 21₂ and the cavity axis 24₁. After compensation of the translation misalignment of the beam 410, the beam propagation direction 420 is colinear with respect to the alignment axis 12 of the alignment device 10 and the beam 410 intersects the second xy-plane in the target point.

The aligned beam generation unit 400 mounted in the alignment device 10 is then detached from the calibration unit 300 and can be integrated in a beam system like the evanescent field reader 200, as described in figure 1.

Thus, the alignment device 10 may be aligned externally of the beam system. The mounting protrusion 60 of the aligned and, thus, calibrated alignment device 10 provides an aligned and/or calibrated extension of the beam housing of the beam generating unit 400 to which the beam propagation direction 420 is aligned.

**Figure 18** shows a schematic cross-sectional view of the alignment device 10 attached to a mounting unit of a system 100 according to the present invention. In particular, a beam generation unit 400 mounted in the alignment device 10, as shown in Figures 2 to 16, is configured within the environment of the evanescent field reader 200, as described in Figure 1. The alignment device 10 with the aligned beam generation unit 400 is mountable to the laser mounting 230 of the adjustment unit 220 of the block 210 in the evanescent field reader 200 of Figure 1.

Due to the alignment properties of the alignment device 10, the adjustments performed with adjustment unit 220 in figure 1 are redundant and the adjustment unit 220 of figure 1 can be omitted and replaced by a simple laser mounting unit 230 without adjustment functions as shown in figure 18. Therein, the laser mounting 230 is calibrated and aligned to aim to the predetermined outer target point at the outer wall of the cuvette 280. In particular, the mounting protrusion 60 of the alignment device 10 is mountable to a tubular section of the laser mounting 230 and is further adjustable in the position of the alignment device 10 in an aligning axis 12 direction and in a rotational position of the alignment device 10 around the aligning axis 12. The final position of the alignment device 10 in the tubular section of the laser mounting 230 may be fastened by a fastening screw.

### List of Reference Numerals

- 10: Alignment device
- 12: Aligning axis
- 20_{1..n}: Cylindric housing
- 21_{1..n}: Cylinder axis
- 22_{1..n}: Outer surface
- 23_{1..n}: Inner cavity
- 24_{1..n}: Cavity axis
- 25_{1..n}: Alignment angle
- 26_{1..n}: Eccentricity
- 40_{1..i}: Angle alignment unit
- 50_{1..j}: Translation alignment unit
- 60: Mounting protrusion
- 62: Mounting protrusion cavity
- 70: Mounting element
- 72_{1..n}: Fastening screw
- 74_{2..n}: Groove
- 100: System
- 120: Target object
- 200: Evanescent field reader
- 210: Block
- 220: Adjustment unit
- 230: Laser mounting
- 240: Aperture
- 250: Diaphragm
- 260: Interference filter
- 270: Detector plate
- 280: Cuvette
- 282: Cuvette well
- 284: Liquid with fluorophores
- 290: Fluorescence light
- 300: Calibration unit
- 400: Beam generating unit
- 410: Beam
- 420: Beam propagation direction
- 430: Beam housing center axis
- n: number of cylindric housings

## Claims

1. An alignment device (10) for aligning a beam propagation direction (420) of a beam generating unit (400) to an aligning axis (12) of the alignment device (10), wherein the beam generating unit (400) is mountable to the alignment device (10), the alignment device (10) comprising a plurality of differently shaped cylindric housings (20_{1..n}) inserted into each other; wherein:
- each cylindric housing (20_{1..n}) comprises an outer surface (22_{1..n}) around its respective cylinder axis (21_{1..n}) and an inner cavity (23_{1..n}) around a respective cavity axis (24_{1..n}) extending through the respective cylindric housing (20_{1..n});
- the inner cavity (23_{1..n}) of each except a smallest of the cylindric housings (20_{1..n}) is cylindric;
- the outer surface (22_{1..n}) of each except a largest of the cylindric housings (20_{1..n}) is cylindric and at least partially and rotatably arranged in the inner cavity (23_{1..n}) of an adjacent one of the cylindric housings (20_{1..n});
- the inner cavity (23ₙ) of the smallest of the cylindric housings (20ₙ) is configured to at least partially receive the beam generating unit (400);
- the cavity axis (24_{1..n}) of each cylindric housing (20_{1..n}) is arranged at an alignment angle (25_{1..n}) >0° and/or eccentric to the cylinder axis (21_{1..n}) of the respective cylindric housing (20_{1..n}); and
- the aligning axis (12) of the alignment device (10) corresponds to the cylindric axis of the largest of the cylindric housings (20₁).

2. The alignment device (10) according to claim 1, further comprising at least one angle alignment unit (40_{1..i}), wherein the at least one angle alignment unit (40_{1..i}) comprises at least two adjacent cylindric housings (20_{1..n}), each with an alignment angle (25_{1..n}) >0°, and optionally
wherein the alignment angles (25_{1..n}) of two of the cylindric housings (20_{1..n}) of the at least one angle alignment unit (40_{1..i}) are of the same size within a predetermined tolerance; and optionally
wherein the alignment angles (25_{1..n}) of each of the at least two cylindric housings (20_{1..n}) of the at least one angle alignment unit (40_{1..i}) are greater than about 2°, preferable in a range of about 2° to about 5° and more preferable about 3° and/or within a predetermined tolerance range of ±0.2°, preferable ±0.15° and more preferable ±0.1°.

3. The alignment device (10) according to claim 2, wherein the alignment device (10) comprises at least two angle alignment units (40_{1..i}), and wherein at least one of the alignment angles (25_{1..n}) of the at least two cylindric housings (20_{1..n}) of a first of the two angle alignment units (40₁) is different to each of the alignment angles (25_{1..n}) of the at least two cylindric housings (20_{1..n}) of a second of the two angle alignment units (40₂).

4. The alignment device (10) according to any of the preceding claims, further comprising at least one translation alignment unit (50_{1..i}), wherein the at least one translation alignment unit (50_{1..i}) comprises at least two adjacent cylindric housings (20_{1..n}), each with an eccentricity (26_{1..n}) of the cavity axis (24_{1..n}) to the cylinder axis (21_{1..n}), and optionally
wherein the eccentricities (26_{1..n}) of two of the cylindric housings (20_{1..n}) of the at least one translation alignment unit (50_{1..i}) are of the same size within a predetermined tolerance; and optionally
wherein the eccentricities (26_{1..n}) of each of the at least two cylindric housings (20_{1..n}) of the at least one translation alignment unit (50_{1..i}) are greater than about 0.3 mm, preferable in a range of about 0.4 mm to about 0.7 mm, and more preferable about 0.5mm and/or within a predetermined tolerance range of ±0.1 mm, preferable ±0.05 mm, and more preferable ±0.01 mm.

5. The alignment device (10) according to claim 4, wherein the alignment device (10) comprises at least two translation alignment units (50_{1..i}), and wherein at least one of the eccentricities (26_{1..n}) of the at least two cylindric housings (20_{1..n}) of a first of the two translation alignment units (50₁) is different to each of the eccentricities (26_{1..n}) of the at least two cylindric housings (20_{1..n}) of a second of the two translation alignment units (50₂).

6. The alignment device (10) according to claims 2 and 4; wherein the alignment device (10) comprises at least one angle alignment unit (40_{1..i}) and at least one translation alignment unit (50_{1..i}); and
wherein the at least one angle alignment unit (40_{1..i}) and the at least one translation alignment unit (50_{1..i}) are arranged adjacent to each other,
wherein the alignment device (10) optionally comprises exactly four cylindric housings (20₁, 20₂, 20₃, 20₄) of which two comprise a cavity axis (21_{1..4}) arranged at an alignment angle (25_{1..4}) >0° to the cylinder axis (21_{1..4}) of the respective cylindric housing (20_{1..4}) and of which two comprise a cavity axis (24_{1..4}) eccentric to the cylinder axis (21_{1..4}) of the respective cylindric housing (20_{1..4}).

7. The alignment device (10) according to any of the preceding claims, wherein the cylinder axis (21_{1..n}) and the cavity axis (24_{1..n}) of each cylindric housing (20_{1..n}) with an alignment angle (25_{1..n}) >0° intersect in a center point of the respective cylindric housing (20_{1..n}).

8. The alignment device (10) according to any of the preceding claims, wherein the largest of the cylindric housings (20₁) further comprises a mounting protrusion (60), and optionally
wherein the mounting protrusion (60) comprises an inner cavity (62) extending through the mounting protrusion (60) and/or being arranged around the cylinder axis (21₁) of the largest cylindric housing (20₁), and optionally
wherein the mounting protrusion (60) comprises an outer shape according to the shape of the inner cavity (23ₙ) of the smallest of the cylindric housings (20ₙ) and an inner cavity (62) around the cylinder axis (21₁) of the largest of the cylindric housings (20₁) in beam propagation direction (420).

9. The alignment device (10) according to any of the preceding claims, wherein the smallest cylindric housing (20ₙ) comprises a mounting element (70) for, in particular rotatably and/or detachably, mounting a beam housing of the beam generating unit (400) in the inner cavity (23ₙ) of the smallest cylindric housing (20ₙ); and/or
wherein, for each pair of adjacent cylindric housings (20_{1..n}), the pair of adjacent cylindric housings (20_{1..n}) comprises mounting elements (70) for rotatably, and in particular detachably, mounting the outer surface (22_{1..n}) of a smaller cylindric housing of the respective pair at least partially in the inner cavity (23_{1..n}) of a larger cylindric housing of the respective pair of adjacent cylindric housings (20_{1..n}); and optionally
wherein the larger cylindric housing of each pair of adjacent cylindric housings (20_{1..n}) comprises a fastening screw (72) configured to be screwed in a radial direction and the smaller cylindric housing of each pair of adjacent cylindric housings (20_{1..n}) comprises a groove (74) in the respective outer surface (22_{1..n}) in a circumferential direction and wherein the fastening screw (72) of the larger cylindric housing is configured to protrude into the groove (74) of the smaller cylindric housing, thereby rotatably, and in particular detachably, mounting the respective pair of adjacent cylindric housings (20_{1..n}) to each other.

10. A system (100) for aiming a beam at a predetermined angle onto and/or at a predetermined point of a target object, the system (100) comprising:
an alignment device (10) according to any of the preceding claims 1 to 9;
a beam generating unit (400); and
the target object;
wherein the beam generating unit (400) is configured to generate a directed beam (410) in the beam propagation direction (410) and is at least partially arranged in the inner cavity (23ₙ) of the smallest cylindric housing (20ₙ) of the alignment device (10); and
wherein the alignment device (10) is configured to align the propagation direction of the beam to the aligning axis (12) of the alignment device (10) and at the predetermined angle and/or at the predetermined point of the target object.

11. The system (100) according to claim 10, wherein the beam generating unit (400) is configured to generate a directed photon beam, a directed neutron beam, a directed ion beam or a directed electromagnetic beam as the directed beam (410).

12. The system (100) according to claim 10 or 11, wherein the position of the alignment device (10) in an aligning axis (12) direction is adjustable; and/or
wherein a rotational position of the alignment device (10) around the aligning axis (12) is adjustable.

13. The system (100) according to any of claims 10 to 12, wherein the system (100) is provided as an evanescent field reader (200), the target object is provided as a transparent cuvette and the beam generating unit (400) is provided as a laser;
and wherein the system (100) further comprises a block to which the largest cylindric housing (20₁) of the alignment device (10) is mounted so that the propagation direction of the beam (420) is aimed at the predetermined angle and/or at the predetermined point of the transparent cuvette.

14. Method of aligning a beam propagation direction (420) of a beam generating unit (400) to an aligning axis (12) of an alignment device (10), comprising the steps:
- providing the alignment device (10) according to any of the claims 1-9, wherein the differently shaped cylindric housings (20_{1..n}) are inserted into each other;
- mounting the beam generating unit (400) to the alignment device (10); and
- rotating the beam generating unit (400) and/or at least one of the cylindric housings (20_{1..n}) about the aligning axis (12) until the beam propagation direction (420) is substantially aligned to the aligning axis (12) of the alignment device (10).

15. Method according to claim 14, further comprising:
- attaching the largest cylindric housing (20₁) of the alignment device (10) to a calibration unit so that a beam (410) generated by the beam generating unit (400) in the beam propagation direction (420) is aimed at a calibration target point of the calibration unit; and/or
- compensating an angular misalignment of the propagation direction to the aligning axis (12) by rotating at least one of the cylindric housings (20_{1..n}) comprising an alignment angle (25_{1..n}) >0° about the aligning axis (12); and/or
- compensating a collinear misalignment of the propagation direction to the aligning axis (12) by rotating at least one of the cylindric housings (20_{1..n}) comprising an eccentric cavity axis (24_{1..n}) about the aligning axis (12); and/or
- rotating the largest cylindric housing (20₁) of the alignment device (10) about the aligning axis (12) for adjusting a polarization direction of the beam (410).
